# EUROPEAN PATENT SPECIFICATION

(11) **EP 3 774 939 B1**
(45) Date of publication and mention of the grant of the patent: **04.11.2026**
(21) Application number: 19715111.1
(22) Date of filing: 09.04.2019
(51) Int. Cl.: C08F 210/06

(54) **POLYPROPYLENE COMPOSITION**
POLYPROPYLENZUSAMMENSETZUNG
COMPOSITION DE POLYPROPYLÈNE

(30) Priority: 10.04.2018 EP 18166435
(43) Date of publication of application: 17.02.2021
(73) Proprietor: Borealis GmbH, 1020 Vienna (AT)
(72) Inventor: GAHLEITNER, Markus, 4021 Linz (AT); WANG, Jingbo, 4021 Linz (AT); BERGER, Friedrich, 4021 Linz (AT); AHO, Jani, 06101 Porvoo (FI)
(74) Representative: Maiwald GmbH
(86) International application number: PCT/EP2019/058863
(87) International publication number: WO 2019/197358

(56) References cited:
- EP-A2- 1 820 822

## Description

The present invention is related to a new polypropylene composition with an optimized or improved balance between mechanical properties, like stiffness and impact strength, and optical properties, especially haze. The present invention is furthermore related to the use of the polypropylene composition and articles made therefrom.

Propylene polymers are suitable for many applications such as packaging films, thin wall packaging, injection stretch blow moulding (ISBM) applications etc.

For such applications, it is a continuous request by the industry to have products at hand that show better stiffness, better optical behaviour and better impact behaviour at the same time: Polymers with higher stiffness can be converted into articles with lower wall thickness, allowing material and energy savings.

Polymers with good optical properties, especially low haze, are desired for consumer related articles to provide good "see-through" properties on the content of the packed goods. Polymers with good impact behaviour are also desired in consumer related articles to keep the content safe even when the package is dropped.

For this reason, polymer producers are constantly looking for polypropylene compositions with an optimized or improved balance between mechanical properties, like stiffness and impact strength, and optical properties, especially haze.

In addition, there is a constant need to provide polymers, which not only show improvements in one or two of these mechanical or optical properties. So it is desired to provide products with a well-balanced and continuously improved overall performance.

Such an improvement in the overall performance can be expressed by the optomechanical ability:
Optomechnical ability (OMA) is herein understood as the ratio of mechanical (especially impact and flexural) behaviour to optical performance, namely haze, wherein the mechanical properties are targeted to be as high as possible and the optical performance such as haze is desired to be as low as possible.

The optomechanical ability can be determined by multiplying Flexural Modulus and notched impact strength (NIS) and putting this product in relation to haze determined on 1 mm plaques: $OMA = \frac{Flex Modulus \left[MPa\right] ∗ NIS \left[\frac{kJ}{{m}^{2}}\right]}{Haze \left(1mm\right) \left[%\right]}$

Several attempts to solve the above mentioned problems have been proposed.

WO 2009/016022 discloses for example the use of a polymer composition comprised of (i) a propylene/butene terpolymer which is comprised of 86.0 - 98.0 wt% of propylene 2.0 - 12.0 wt% of butene and 0.1 to less than 1.0 wt% of ethylene and (ii) 0.001 - 1.0 wt% of one or more phosphorous based and/or polymeric α-nucleating agents for the production of sterilizable water or air quenched blown films which have the following properties: a) a haze according to ASTM D 1003-92 for a 50 µm film of less than 8% before and after steam sterilization at 121°C for 30 minutes and b) 20° Gloss according to DIN 67 530 for a 50 µm film of at least 55% be fore steam sterilization at 121°C for 30 minutes and of at least 60% af ter steam sterilization at 121°C for 30 minutes.

Impact strength is not mentioned here, but as is shown in the experimental part of the present application, nucleated terpolymers with an ethylene content below 1.0 wt% have quite low impact strength and quite low optomechanical ability.

EP 2 526 146 B1 is concerned with isotactic polypropylene random copolymers modified with a specific class of α crystal nucleating agents, said copolymers being characterized by high impact strength and good transparency while retaining or even increasing stiffness. It is also concerned with a process for modifying said copolymers with said specific class of α-crystal nucleating agents. The specific nucleating agents used in inventive examples are sorbitol based nucleating agents like Millad 3988, which is the soluble α-crystal nucleating agent 1,3:2,4-bis-(3,4-dimethylbenzylidene) sorbitol (CAS No. 135861-56-2) commercially available from Miliken Co., USA.

No terpolymers are mentioned and, as shown in the experimental part of the present application, such nucleated copolymers have quite high haze values.

WO 2013/174778 describes a propylene, ethylene, 1-butene terpolymer containing from 0.5 wt% to 2.2 wt% of ethylene derived units and from 6.0 wt% to 20.0 wt% of 1 butene derived units;
wherein:
i) the ratio C2wt%/C4wt% ranges from 0.12 to 0.06; wherein C2wt% is the weight per cent of ethylene derived units and C4wt% is the weight per cent of 1-butene derived units;
ii) the Melt flow rate ranges from 0.4 to 54 g/10 min;
iii) the xylene soluble fraction at 25°C is lower than 15.0 wt% the minimum value being 5.0 wt%.

No notched impact strength (NIS) and no flexural modulus is mentioned. No nucleating agent is used in the respective examples.

WO 2015/086213 describes a propylene ethylene 1-butene terpolymer wherein:
(i) the content of ethylene derived units ranges from 1.1 wt to 1.9 wt,
(ii) the content of 1-butene ranges from 5.0 wt to 9.0 wt,
(iii) the melting point (Tm) of the non-nucleated terpolymer ranges from 125°C to 137°C;
(iv) the xylene soluble fraction at 25°C is lower than 8.0 wt.

Again, no notched impact strength (NIS) is mentioned. No nucleating agent is used in the respective examples.

EP 1 820 822 A2 discloses a polypropylene resin composition suitable for heat sealing applications having lower levels of hexane extractables. The polypropylene resin composition comprises a polymer blend including a first random copolymer of propylene and one or more C₂-C₂₀ α-olefins other than propylene having a melting point of above 116 °C and up to about 145 °C and which constitutes from about 60 weight percent to about 95 weight percent of the composition, and a second random copolymer of propylene and one or more C₂-C₂₀ α-olefins other than propylene having a melting point of from about 70 °C to no more than 116 °C and which constitutes from about 5 weight percent to about 40 weight percent of the composition. The polymer blend includes a xylene soluble fraction having a weight average molecular weight of above about 100 kg/mol and an intrinsic viscosity of above about 1.0 dl/g.

Thus, although a lot of work has be done in this field, there is still the need to provide polypropylene compositions with an optimized or improved balance between mechanical properties, like stiffness and impact strength, and optical properties, especially haze.

Surprisingly the inventors found, that the above problems can be solved by a propylene composition based on a terpolymer, which is nucleated with a specific kind of α-nucleating agent.

### Summary of the Invention

Accordingly, the present invention is directed to a
polypropylene composition comprising
(A) at least 50.0 wt% of a propylene terpolymer comprising
   (i) ethylene-derived comonomer units in an amount of from 1.0 to 3.0 wt% and
   (ii) comonomer units derived from a C₄ to C₁₀ α-olefin in an amount of from 5.5 to 10.0 wt% whereby the MFR₂ (230°C, 2.16kg, ISO1133) of the propylene terpolymer is in a range of 0.5 to 15.0 g/10 min and
(B) 0.0001 to 1.0 wt% of an α-nucleating agent and
(C) optionally one or more further additives in a total amount of from 0.0 up to 5.0 wt%, based on the composition, selected from the group comprising slip agents, anti-block agents, UV stabilizers, antistatic agents, antioxidants,
wherein the polypropylene composition exhibits a double melting peak in differential scanning calorimetry, both peak temperatures being in the range of 120 to 155°C, and
wherein the α-nucleating agent is selected from phosphate-based α-nucleating agents and sorbitol-based α-nucleating agents.

It has surprisingly been found out that such compositions have an optimized or improved balance between mechanical properties, like stiffness and impact strength, and optical properties, especially haze.

In an embodiment of the present invention, the propylene terpolymer (a) is obtainable, preferably obtained, in the presence of a Ziegler-Natta catalyst.

In a further embodiment of the present invention, the polypropylene composition has
i) a haze according to ASTM D 1300-00 determined on 1 mm plaques below 15.0 % and
ii) a Charpy notched Impact strength (NIS, ISO 179 1eA determined at 23°C) of at least 8.0 kJ/m²

In another embodiment of the present invention, the polypropylene composition has an optomechancial ability (OMA) according to formula $OMA = \frac{Flex Modulus \left[MPa\right] ∗ NIS \left[\frac{kJ}{{m}^{2}}\right]}{Haze \left(1mm\right) \left[%\right]}$ of at least 700 or more.

In still another embodiment, the invention relates to articles comprising the polypropylene composition.

### Detailed description

In the following, the individual components are defined in more detail.

The polypropylene composition of the present inventions comprises at least 50.0 wt%, preferably at least 80.0 wt% and more preferably at least 95.0 wt% of a terpolymer (A).

The propylene terpolymer (A) used in the polypropylene composition of the invention is a random terpolymer and comprises at least ethylene as first comonomer and a C₄ to C₁₀ α-olefin as the second comonomer.

Accordingly, the propylene terpolymer comprises units derived from propylene and from ethylene and from one further α-olefin selected from the group consisting of C₄-α-olefin, C₅-α-olefin, C₆-α-olefin, C₇-α-olefin, C₈-α-olefin, C₉-α-olefin and C₁₀-α-olefin.

More preferably the propylene terpolymer comprises units derived from propylene and from ethylene and one other α-olefin selected from the group consisting of 1-butene, 1-pentene, 1-hexene, 1-heptene, 1-octene, 1-nonene and 1-decene, wherein 1-butene and 1- hexene are even more preferred.

It is in particular preferred that the propylene terpolymer consists of units derived from propylene, ethylene and 1-butene or from propylene, ethylene and 1-hexene.

Most preferred the propylene terpolymer consists of units derived from propylene, ethylene and 1-butene.

The propylene terpolymer used in the polypropylene composition according to this invention is featured by a moderate comonomer content.

Accordingly, the propylene terpolymer used in the polypropylene composition according to this invention shall have an ethylene content of at least 1.0 wt%.

Thus it is preferred that the propylene terpolymer has an ethylene content in the range of from 1.0 wt% to 3.0 wt%, more preferably in the range of from 1.0 to 2.5 wt%, still more preferably in the range of from 1.1 to 2.0 wt%, especially in the range of from 1.1 to 1.7 wt%.

Moreover, the propylene terpolymer shall have a C₄ to C₁₀ α-olefin, preferably a C₄ or C₆ α-olefin comonomer content of at least 5.5 wt%.

Thus it is preferred, that the propylene terpolymer has an C₄ to C₁₀ α-olefin, preferably a C₄ or C₆ α-olefin comonomer content in the range of from 5.5 to 10.0 wt% and more preferably in the range of from 5.5 to 8.0 wt%.

Preferably the terpolymer has a rather high content of propylene (C3), i.e. at least 82.0 wt%, i.e. equal or more than 86.0 wt%, more preferably equal or more than 88.0 wt%, yet more preferably equal or more than 90.0 wt%, like equal or more than 91.0 wt%.

The propylene terpolymer has a melt flow rate MFR₂ (230°C) measured according to ISO 1133 in the range of from 0.5 to 15.0 g/10min, preferably in the range of from 0.8 to 8.0 g/10 min, more preferably in the range of from 1.0 to 6.0 g/10 min, still more preferably in range of from 1.2 to 4.0 g/10 min and yet more preferably in the range of 1.2 to 3.0 g/10 min.

Alternatively, the propylene terpolymer can be defined by the xylene cold soluble (XCS) content measured according to ISO 6427. Accordingly, the propylene terpolymer is preferably featured by a xylene cold soluble (XCS) content of below 20.0 wt%, more preferably of below 15.0 wt%.

Thus, it is in particular appreciated that the propylene terpolymer has a xylene cold soluble (XCS) content in the range of 3.0 to below 20.0 wt %, more preferably in the range of 5.0 to below 15.0 wt% and most preferably in the range of 8.6 to 12.5 wt%.

Alternatively, the propylene terpolymer can be defined by the melting temperature (Tm) measured via DSC according to ISO 11357.

Accordingly, the propylene terpolymer (A), i.e. the propylene terpolymer before nucleation, has a melting temperature Tm of equal or higher than 130°C. Preferable the melting temperature Tm is in the range of 130°C to 145°C, more preferably in the range of 132°C to 142°C.

The propylene terpolymer can further be unimodal or multimodal, like bimodal in view of the molecular weight distribution and/or the comonomer content distribution; both unimodal and bimodal propylene terpolymers are equally preferred.

If the propylene terpolymer is unimodal, it is preferably produced in a single polymerization step in one polymerization reactor (R1). Alternatively, a unimodal propylene terpolymer can be produced in a sequential polymerization process using the same polymerization conditions in all reactors.

If the propylene terpolymer is multimodal, it is preferably produced in a sequential polymerization process using different polymerization conditions (amount of comonomer, hydrogen amount, etc.) in the reactors.

The propylene terpolymer can be produced by polymerization in the presence of any conventional coordination catalyst system including Ziegler-Natta, chromium and single site (like metallocene catalyst), preferably the propylene terpolymer is produced in the presence of a Ziegler-Natta catalyst system.

The propylene terpolymer can be produced in a single polymerization step comprising a single polymerization reactor (R1) or in a sequential polymerization process comprising at least two polymerization reactors (R1) and (R2), whereby in the first polymerization reactor (R1) a first propylene polymer fraction (R-PP1) is produced, which is subsequently transferred into the second polymerization reactor (R2). In the second polymerization reactor (R2) a second propylene polymer fraction (R-PP2) is then produced in the presence of the first propylene polymer fraction (R-PP1).

If the propylene terpolymer is produced in at least two polymerization reactors (R1) and (R2), it is possible that
i) in the first reactor (R1) a propylene homopolymer and in the second reactor (R2) a propylene terpolymer is produced, yielding the propylene terpolymer (a) or
ii) in the first reactor (R1) a propylene-ethylene copolymer and in the second reactor (R2) a propylene C₄ to C₁₀ α-olefin copolymer is produced, yielding the propylene terpolymer (a) or
iii) in the first reactor (R1) a propylene C₄ to C₁₀ α-olefin copolymer and in the second reactor (R2) a propylene-ethylene copolymer is produced, yielding the propylene terpolymer (a) or
iv) in the first reactor (R1) a propylene terpolymer and in the second reactor (R2) a propylene terpolymer is produced, yielding the propylene terpolymer (a).

Polymerization processes which are suitable for producing the propylene terpolymer generally comprises one or two polymerization stages and each stage can be carried out in solution, slurry, fluidized bed, bulk or gas phase.

The term "polymerization reactor" shall indicate that the main polymerization takes place. Thus in case the process consists of one or two polymerization reactors, this definition does not exclude the option that the overall system comprises for instance a pre-polymerization step in a pre-polymerization reactor. The term "consist of" is only a closing formulation in view of the main polymerization reactors.

The term "sequential polymerization process" indicates that the propylene terpolymer is produced in at least two reactors connected in series. Accordingly, such a polymerization system comprises at least a first polymerization reactor (R1) and a second polymerization reactor (R2), and optionally a third polymerization reactor (R3).

The first, respectively the single, polymerization reactor (R1) is preferably a slurry reactor and can be any continuous or simple stirred batch tank reactor or loop reactor operating in bulk or slurry. Bulk means a polymerization in a reaction medium that comprises of at least 60 % (w/w) monomer. According to the present invention the slurry reactor is preferably a (bulk) loop reactor.

In case a "sequential polymerization process" is applied, the second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

A preferred multistage process is a "loop-gas phase"-process, such as developed by Borealis (known as BORSTAR^{®} technology) described e.g. in patent literature, such as in EP 0 887 379, WO 92/12182, WO 2004/000899, WO 2004/111095, WO 99/24478, WO 99/24479 or in WO 00/68315.

A further suitable slurry-gas phase process is the Spheripol^{®} process of Basell.

Preferably, the propylene terpolymer (A) according to this invention is produced in the presence of a Ziegler-Natta catalyst.

The Ziegler-Natta catalyst is fed into the first, respectively the single, polymerization reactor (R1) and is optionally transferred with the polymer (slurry) obtained in the first polymerization reactor (R1) into the subsequent reactors, if the propylene terpolymer is produced in a sequential polymerization process.

If the process covers also a pre-polymerization step, it is preferred that all of the Ziegler-Natta catalyst is fed in the pre-polymerization reactor. Subsequently the pre-polymerization product containing the Ziegler-Natta catalyst is transferred into the first, respectively the single, polymerization reactor (R1).

This Ziegler-Natta catalyst can be any stereo-specific Ziegler-Natta catalyst for propylene polymerization, which preferably is capable of catalysing the polymerization and copolymerization of propylene and comonomers at a pressure of 500 to 10000 kPa, in particular 2500 to 8000 kPa, and at a temperature of 40 to 110°C, in particular of 60 to 110°C. Preferably, the Ziegler-Natta catalyst (ZN-C) comprises a high-yield Ziegler-Natta type catalyst including an internal donor component, which can be used at high polymerization temperatures of 80°C or more.

Such high-yield Ziegler-Natta catalyst (ZN-C) can comprise a succinate, a diether, a phthalate etc., or mixtures therefrom as internal donor (ID) and are for example commercially available for example from LyondellBasell under the Avant ZN trade name.

Further useful solid catalysts are also those disclosed in WO-A-2003/000757, WO-A-2003/000754, WO-A-2004/029112 and WO2007/137853. These catalysts are solid catalysts of spherical particles with compact structure and low surface area of the particles. Further, these catalysts are featured by a uniform distribution of catalytically active sites thorough the catalyst particles. Catalysts are prepared by emulsion-solidification method, where no external support is needed. The dispersed phase in the form of liquid droplets of the emulsion forms the catalyst part, which is transformed to solid catalyst particles during the solidification step.

The Ziegler-Natta catalyst is preferably used in association with an alkyl aluminum cocatalyst and optionally external donors.

As further component in the instant polymerization process an external donor is preferably present. Suitable external donors include certain silanes, ethers, esters, amines, ketones, heterocyclic compounds and blends of these. It is especially preferred to use a silane. It is most preferred to use silanes of the general formula

R^{a}ₚR^{b}_{q}Si(OR^{c})_{(4-p-q)}

wherein R^{a}, R^{b} and R^{c} denote a hydrocarbon radical, in particular an alkyl or cycloalkyl group, and wherein p and q are numbers ranging from 0 to 3 with their sum p + q being equal to or less than 3. R^{a}, R^{b} and R^{c} can be chosen independently from one another and can be the same or different. Specific examples of such silanes are (tert-butyl)₂Si(OCH₃)₂, (cyclohexyl)(methyl)Si(OCH₃)₂, (phenyl)₂Si(OCH₃)₂ and (cyclopentyl)₂Si(OCH₃)₂, or of general formula

Si(OCH₂CH₃)₃(NR³R⁴)

wherein R³ and R⁴ can be the same or different a represent a hydrocarbon group having 1 to 12 carbon atoms.

R³ and R⁴ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that R³ and R⁴ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both R³ and R⁴ are the same, yet more preferably both R³ and R⁴ are an ethyl group.

Especially preferred external donors are the dicyclopentyl dimethoxy silane donor (D-donor) or the cyclohexylmethyl dimethoxy silane donor (C-Donor).

In addition to the Ziegler-Natta catalyst and the optional external donor, a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst is a trialkylaluminium, like triethylaluminium (TEAL), dialkyl aluminium chloride or alkyl aluminium dichloride or mixtures thereof. In one specific embodiment the co-catalyst is triethylaluminium (TEAL).

Preferably the ratio between the co-catalyst (Co) and the external donor (ED) [Co/ED] and/or the ratio between the co-catalyst (Co) and the transition metal (TM) [Co/TM] should be carefully chosen.

Accordingly,
(a) the mol-ratio of co-catalyst (Co) to external donor (ED) [Co/ED] must be in the range of from 5.0 to 45.0, preferably is in the range of from 5.0 to 35.0, more preferably is in the range of from 5.0 to 25.0; and optionally
(b) the mol-ratio of co-catalyst (Co) to titanium compound (TC) [Co/TC] must be in the range of above 80.0 to 500.0, preferably is in the range of from 100.0 to 350.0, still more preferably is in the range of from 120.0 to 300.0.

The propylene terpolymer used according to this invention is thus preferably produced in the presence of
(a) a Ziegler-Natta catalyst comprising an internal donor,
(b) optionally a co-catalyst (Co), and
(c) optionally an external donor (ED).

As a second component, the propylene composition according to the present invention comprises an α-nucleating agent.

The α-nucleating agent is added in an amount of 0.0001 to 1.0 wt%, preferably 0.01 to 0.8 wt% and more preferably in an amount of 0.05 to 0.5 wt%, based on the total weight of the composition.

The polypropylene composition according to the present invention comprises an α-nucleating agent, which is selected from phosphate-based α-nucleating agents and sorbitol-based α-nucleating agents.

The α-nucleating agent which may be preferably used for the polypropylene composition of the invention include organic alpha-nucleating agents selected from the group of phosphorous based nucleating agents including:
sodium-2,2'-methylene-bis(4,6-di-t-butylphenyl)phosphate,
sodium-2,2'-ethylidene-bis(4,6-di-t-butylphenyl)phosphate,
lithium-2,2'-methylene-bis(4,6-di-t-butylphenyl)phosphate,
lithium-2,2'-ethylidene-bis(4,6-di-t-butylphenyl)phosphate,
sodium-2,2'-ethylidene-bis(4-i-propyl-6-t-butylphenyl)phosphate,
lithium-2,2'-methylene-bis(4-methyl-6-t-butylphenyl)phosphate,
lithium-2,2'-methylene-bis(4-ethyl-6-t-butylphenyl)phosphate,
calcium-bis[2,2'-thiobis(4-methyl-6-t-butylphenyl)phosphate],
calcium-bis[2,2'-thiobis(4-ethyl-6-t-butylphenyl)phosphate],
calcium-bis[2,2'-thiobis(4,6-di-t-butylphenyl)phosphate],
magnesium-bis[2,2'-thiobis(4,6-di-t-butylphenyl)phosphate],
magnesium-bis[2,2'-thiobis(4-t-octylphenyl)phosphate],
sodium-2,2'-butylidene-bis(4,6-dimethylphenyl)phosphate,
sodium-2,2'-butylidene-bis(4,6-di-t-butylphenyl)phosphate,
sodium-2,2'-t-octylmethylene-bis(4,6-dimethyl-phenyl)phosphate,
sodium-2,2'-t-octylmethylene-bis(4,6-di-t-butylphenyl)phosphate,
calcium-bis[2,2'-methylene-bis(4,6-di-t-butylphenyl)phosphate],
magnesium-bis[2,2'-methylene-bis{4,6-di-t-butylphenyl)phosphate],
barium-bis[2,2'-methylene-bis(4,6-di-t-butylphenyl)phosphate],
sodium-2,2'-methylene-bis(4-methyl-6-t-butylphenyl)phosphate,
sodium-2,2'-methylene-bis(4-ethyl-6-t-butylphenyl)phosphate,
sodium(4,4'-dimethyl-5,6'-di-t-butyl-2,2'-biphenyl)phosphate,
calcium-bis-[(4,4'-dimethyl-6,6'-di-t-butyl-2,2'-biphenyl)phosphate],
sodium-2,2'-ethylidene-bis(4-m-butyl-6-t-butylphenyl)phosphate,
sodium-2,2'-methylene-bis-(4,6-di-methylphenyl)phosphate,
sodium-2,2'-methylene-bis(4,6-di-t-ethyl-phenyl)phosphate,
potassium-2,2'-ethylidenebis(4,6-di-t-butylphenyl)phosphate,
calcium-bis[2,2'-ethylidene-bis(4,6-di-t-butylphenyl)phosphate],
magnesium-bis[2,2'-ethylidene-bis(4,6-di-t-butylphenyl)phosphate],
barium-bis[2,2'-ethylidene-bis-(4,6-di-t-butylphenyl)phosphate],
aluminium-hydroxy-bis[2,2'-methylene-bis(4,6-di-t-butyl-phenyl)phosphate],
aluminium-tris[2,2'-ethylidene-bis(4,6-di-tbutylphenyl)phosphate].

A second group of phosphorous based nucleating agents includes for example aluminium-hydroxyl-bis[2,4,8,10-tetrakis(1,1-dimethylethyl)-6-hydroxy-12H-dibenzo-[d,g]-dioxa-phoshocin-6-oxidato] and blends with Li-myristate or Li-stearate.

Of the phosphorous based nucleating agents sodium-2,2'-methylene-bis(4,6-di-t-butylphenyl)phosphate or aluminium- hydroxy-bis[2,2'-methylene-bis(4,6-di-t-butyl-phenyl)-phosphate] or aluminium-hydroxyl-bis-[2,4,8,10-tetrakis(1,1-dimethylethyl)-6-hydroxy-12H-dibenzo-[d,g]-d ioxa-phoshocin-6-oxidato] or blends with Li-myristate or Li-stearate are especially preferred.

Nucleating agents such as ADK NA-11 (Methylen-bis(4,6-di-t-butylphenyl)phosphate sodium salt) and ADK NA-21 (aluminium hydroxyl-bis[2,4,8,10-tetrakis(1,1-d imethylethyl)-6-hydroxy-12H-dibenzo-[d,g]-dioxaphoshocin-6-oxidato]) are commercially available from Asahi Denka Kokai and are preferably added to the propylene-based composition of the invention.

Among all alpha nucleating agents mentioned above aluminium hydroxyl-bis[2,4,8,10-tetrakis(1,1-dimethylethyl)-6-hydroxy-12H-dibenzo-[d,g]-dioxaphoshocin-6-oxidato] based nucleating agents like ADK NA-21, NA-21 E, NA-21 F, sodium-2,2'-methylene-bis(4,6-di-t-butylphenyl)phosphate (ADK NA-11) and aluminium-hydroxy-bis[2,2'-methylenebis(4,6-di-t-butylphenyl)-phosphate] are particularly preferred.

Most particularly preferred nucleating agents are ADK NA-21 and ADK NA-11.

The polypropylene composition according to the present invention may optionally contain one or more further additives in a total amount of from 0.0 up to 5.0 wt%, based on the composition, selected from the group comprising slip agents, anti-block agents, UV stabilizers, acid scavengers, anti-oxidants, antistatic agents, etc.

Such additives are commonly known to an art skilled person.

Slip agents are also commonly known in the art. Slip agents migrate to the surface and act as lubricants polymer to polymer and polymer against metal rollers, giving reduced coefficient of friction (CoF) as a result. Examples are fatty acid amids, like erucamides (CAS No. 112-84-5), oleamides (CAS No. 301-02-0) or stearamide (CAS No. 124-26-5).

Examples of antioxidants which are commonly used in the art, are sterically hindered phenols (such as CAS No. 6683-19-8, also sold as Irganox 1010 FF^{™} by BASF), phosphorous based antioxidants (such as CAS No. 31570-04-4, also sold as Hostanox PAR 24 (FF)^{™} by Clariant, or Irgafos 168 (FF)TM by BASF), sulphur based antioxidants (such as CAS No. 693- 36-7, sold as Irganox PS-802 FL^{™} by BASF), nitrogen-based antioxidants (such as 4,4'- bis(1,1'-dimethylbenzyl)diphenylamine), or antioxidant blends.

Acid scavengers are also commonly known in the art. Examples are calcium stearates, sodium stearates, zinc stearates, magnesium and zinc oxides, synthetic hydrotalcite (e.g. SHT, CAS-no. 11097-59-9), lactates and lactylates, as well as calcium stearate (CAS 1592-23-0) and zinc stearate (CAS 557-05-1).

Common antiblocking agents are natural silica such as diatomaceous earth (such as CAS-no. 60676-86-0 (SuperfFloss^{™}), CAS-no. 60676-86-0 (SuperFloss E^{™}), or CAS-no. 60676-86-0 (Celite 499^{™})), synthetic silica (such as CAS-no. 7631-86-9, CAS-no. 7631-86-9, CASno. 7631-86-9, CAS-no. 7631-86-9, CAS-no. 7631-86-9, CAS-no. 7631-86-9, CAS-no. 112926-00-8, CAS-no. 7631-86-9, or CAS-no. 7631-86-9), silicates (such as aluminium silicate (Kaolin) CAS-no. 1318-74-7, sodium aluminum silicate CAS-no. 1344-00-9, calcined kaolin CAS-no. 92704-41-1, aluminum silicate CAS-no. 1327-36-2, or calcium silicate CAS- no. 1344-95-2), synthetic zeolites (such as sodium calcium aluminosilicate hydrate CAS-no. 1344-01-0, CAS-no. 1344-01-0, or sodium calcium aluminosilicate, hydrate CAS-no. 1344-01-0).

Suitable UV-stabilisers are, for example, Bis-(2,2,6,6-tetramethyl-4-piperidyl)-sebacate (CAS 52829-07-9, Tinuvin 770); 2-hydroxy-4-n-octoxy-benzophenone (CAS 1843-05-6, Chimassorb 81).

Alpha nucleating agents like sodium benzoate (CAS 532-32-1); 1,3:2,4-bis(3,4-dimethylbenzylidene)sorbitol (CAS 135861-56-2, Millad 3988).

Suitable antistatic agents are, for example, glycerol esters (CAS No. 97593-29-8) or ethoxylated amines (CAS No. 71786-60-2 or 61791-31-9) or ethoxylated amides (CAS No. 204-393-1).

Usually these additives are added in quantities of 100-1.000 ppm for each single component.

In an embodiment the present invention is also related to a process for the preparation of the polypropylene composition as define above, the process comprising the steps of
(i) preparing the propylene terpolymer by polymerizing propylene, ethylene and a C₄ to C₁₀ α-olefin, preferably in the presence of a Ziegler-Natta catalyst,
(ii) (ii) mixing said propylene terpolymer (A) with an α-nucleating agent (B), optionally in the presence of one or more additives (C), to obtain a mixture of components (A), (B) and optional (C), and
(iii) (iii) extruding said mixture to obtain the polypropylene composition.

### The polypropylene composition

The inventive polypropylene composition is especially featured by its specific optical and mechanical properties and by its double melting peak in differential scanning calorimetry (DSC).

Accordingly, the inventive polypropylene composition, exhibits a double melting peak (Tm1 and Tm2) in differential scanning calorimetry, both peak temperatures being in the range of from 120 to 155°C, preferably in the range of 122 to 150°C.

Tm₁ of the inventive polypropylene composition is preferably in the range of 134 to 155°C and more preferably in the range of 136 to 150°C, whereas

Tm₂ of the inventive polypropylene composition is preferably in the range of 120 to 132°C and more preferably in the range of 122 to 132°C.

The inventive polypropylene composition has a Charpy notched Impact strength (NIS, ISO 179 1eA determined at 23°C) of at least 8.0 kJ/m², preferably in the range of from 8.0 to 30.0 kJ/m², more preferably in the range of from 9.0 to 25.0 kJ/m², even more preferably in the range of from 10.0 to 20.0 kJ/m². The Charpy notched impact strength is measured according to ISO 179/1eA at 23° C on injection moulded test specimens as described in EN ISO 1873-2.

The polypropylene composition according to the invention preferably has a haze value below 15.0%, preferably of below 12% and even more preferably of below 10.0 %. The haze value is measured according to ASTM D1003 on injection-moulded plaques having 1 mm thickness produced as described in EN ISO 1873-2.

Thus, the polypropylene composition preferably has
i) a haze according to ASTM D 1300-00 determined on 1 mm plaques below 15.0 % and
ii) a Charpy notched Impact strength (NIS, ISO 179 1eA determined at 23°C) of at least 8.0 kJ/m².

In addition, it is preferred that the polypropylene composition has a flexural modulus measured according to ISO 178 of at least 600 MPa and more preferably of at least 700 MPa.

The upper limit for the flexural modulus of the polypropylene composition can be up to 2000 MPa, preferably up to 1600 MPa and more preferably up to 1200 MPa.

In one embodiment of the present invention, the polypropylene composition has an optomechancial ability (OMA) of at least 700 or more. The upper limit is preferably 2000. Preferably the optomechancial ability (OMA) is at least 800 up to 1800, more preferably at least 900 up to 1500.

The optomechancial ability (OMA) is determined according to below formula: $OMA = \frac{Flex Modulus \left[MPa\right] ∗ NIS \left[\frac{kJ}{{m}^{2}}\right]}{Haze \left(1mm\right) \left[%\right]}$

### Article

The polypropylene composition of this invention can be further converted to an end product, i.e. an article, by using normal conversion techniques, such as injection moulding, compression moulding, blow moulding (extrusion or injection stretch blow moulding), extrusion (film, sheet, pipe, tuber, profile extrusion), film blowing, thermoforming and the like. Preferably, articles are packaging containers made by injection moulding, blow moulding or thermoforming, or packaging films made by film extrusion.

The polypropylene composition of the present invention is therefore suitable for the preparation of a variety of articles, like films (cast and blown film) for flexible packaging systems, such as bags or pouches for food and pharmaceutical packaging or medical articles in general as well as moulded articles.

Articles comprising the polypropylene composition of the present invention have sufficient thermal stability to enable sterilization treatment.

Therefore, the present invention is also directed to a sterilizable or sterilized article, preferably to a sterilizable or sterilized film, like a sterilizable or sterilized blown film.

Such films can be subjected to a steam sterilization treatment in a temperature range of about 120°C to 130°C.

In an embodiment, the present invention is related to an article, the article being an unoriented mono-layer film comprising the inventive polypropylene composition. Accordingly the present invention is also directed to an article, the article being an unoriented mono-layer film, like cast film or blown film, e.g. air cooled blown film, comprising at least 90 wt%, preferably comprising at least 95 wt%, yet more preferably comprising at least 99 wt%, of the instant polypropylene composition.

The above described composition is suitable for the production of blown films as well as cast films. Preferred films are blown films.

Mono-layer films having a thickness of 5 to 300 µm, preferably 10 to 200 µm, more preferably 20 to 150 µm are suitable according to the present invention.

The films, preferably blown films, according to the invention comprising the inventive polypropylene composition shall preferably have a haze determined on 50 µm blown film of below 15.0%, preferably of below 12.0%, and more preferably of below 10.0 %.

The films, preferably blown films, according to the invention furthermore have a haze value (determined on 50 µm blown film) after steam sterilization at 121°C for 30 min of still below 15.0%, preferably of below 12.0%, and more preferably of below 10.0%.

In an embodiment of the present invention such unoriented film comprising the inventive polypropylene composition shall preferably have a dart-drop strength (DDI), measured using ASTM D1709, method A on 50 µm blown film of at least 50 g, more preferably of at least 55 g. A suitable upper limit is 1000 g or even higher.

In another embodiment, the tensile modulus in machine (MD) direction (determined acc. to ISO 527-3 on blown films with a thickness of 50 µm) of such unoriented film comprising the inventive polypropylene composition shall preferably be at least 500 MPa, more preferably at least 600 MPA, yet more preferably at least 700 MPa and even more preferably at least 750 MPa.

A suitable upper limit is 1000 MPa.

Viewed from another aspect, it is a constant need to provide films, which not only show improvements in one or two of these mechanical or optical properties. So it is desired to provide products with a well-balanced and continuously improved overall performance. Such an improvement in the overall performance of a blown film can be expressed by the optomechanical ability II:
Optomechanical abilty II (OMA II) is understood as the ratio of mechanical (especially dart-drop strength (DDI) and tensile (MD)) behaviour, to optical performance, namely haze, wherein the mechanical properties are targeted to be as high as possible and the optical performance in the sense of haze is desired to be as low as possible.

The optomechanical ability II can be determined by multiplying Tensile Modulus (MD) and dart-drop strength (DDI) and putting this product in relation to haze determined on 50 µm blown film.

The optomechanical ability II (OMA II) is determined according the formula given below: $OMA II = \frac{Tensile Modulus \left(MD\right) \left[MPa\right] * DDI \left(g\right)}{Haze \left(50 μm\right) \left[%\right]}$

Thus in one further embodiment of the present invention, the optomechanical ability II of films comprising the inventive propylene composition determined on 50 µm blown film is at least 5300 [MPa*g/%] or higher, such as 5400 [MPa*g/%], or even higher.

In yet another embodiment, the present invention is related to an article, the article being a moulded article comprising the inventive polypropylene composition.

Moulded articles can be produced by injection moulding, stretch moulding or injection stretch blow moulding. Moulded articles produced by injection moulding are especially preferred.

The moulded articles preferably are thin-walled articles having a wall thickness of 300 micrometer to 2 mm. More preferably, the thin-walled articles have a wall thickness of 300 micrometer to 1400 micrometer, and even more preferably, the thin-walled articles have a wall thickness of 300 micrometer to 900 micrometer.

The moulded articles of the current invention can be containers, such as cups, buckets, beakers, trays or parts of such articles, such as see-through-windows, lids, or the like. Articles of the current invention are also suitable for medical or diagnostic purposes, such as syringes, beakers, titre plates, pipettes, etc.

### Experimental Part:

### Measuring methods

The xylene soluble fraction at room temperature (XCS, wt%): The amount of the polymer soluble in xylene is determined at 25°C according to ISO 16152; 2005, 5th edition;

MFR₂ (230°C) is measured according to ISO 1133 (230°C, 2.16 kg load).

The melt flow rate is measured as the MFR₂ in accordance with ISO 1133 15 (230°C, 2.16 kg load) for polypropylene. The MFR is an indication of the flowability, and hence the processability, of the polymer. The higher the melt flow rate, the lower the viscosity of the polymer.

### Comonomer content

Quantitative nuclear-magnetic resonance (NMR) spectroscopy was used to quantify the comonomer content of the polymers.

### Comonomer content quantification of poly(propylene-co-ethylene) copolymers

Quantitative ¹³C{¹H} NMR spectra were recorded in the solution-state using a Bruker Advance III 400 NMR spectrometer operating at 400.15 and 100.62 MHz for ¹H and ¹³C respectively. All spectra were recorded using a ¹³C optimised 10 mm extended temperature probe head at 125°C using nitrogen gas for all pneumatics. Approximately 200 mg of material was dissolved in 3 ml of *1,2*-tetrachloroethane-*d*₂ (TCE-*d₂*) along with chromium-(III)-acetylacetonate (Cr(acac)₃) resulting in a 65 mM solution of relaxation agent in solvent {8}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {3, 4}. A total of 6144 (6k) transients were acquired per spectra. Quantitative ¹³C{¹H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed {7}.

The comonomer fraction was quantified using the method of Wang et. al. {6} through integration of multiple signals across the whole spectral region in the ¹³C{¹H} spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et al. was modified to reduce the influence of non-zero integrals of sites that are known to not be present. This approach reduced the overestimation of ethylene content for such systems and was achieved by reduction of the number of sites used to determine the absolute ethylene content to: $E = 0.5 \left(Sββ+Sβγ+Sβδ+0.5\left(Sαβ+Sαγ\right)\right)$

Through the use of this set of sites the corresponding integral equation becomes: $E = 0.5 \left({I}_{H}+{I}_{G}+0.5\left({I}_{C}+{I}_{D}\right)\right)$ using the same notation used in the article of Wang et al. {6}. Equations used for absolute propylene content were not modified.

The mole percent comonomer incorporation was calculated from the mole fraction: $E \left[mol%\right] = 100 * fE$

The weight percent comonomer incorporation was calculated from the mole fraction: $E \left[wt%\right] = 100 * \left(fE*28.06\right) / \left(\left(fE*28.06\right)+\left(\left(1-fE\right)*42.08\right)\right)$

### Bibliographic references:

1- Busico, V., Cipullo, R., Prog. Polym. Sci. 26 (2001) 443.
2- Busico, V., Cipullo, R., Monaco, G., Vacatello, M., Segre, A.L., Macromoleucles 30 (1997) 6251.
3- Zhou, Z., Kuemmerle, R., Qiu, X., Redwine, D., Cong, R., Taha, A., Baugh, D. Winniford, B., J. Mag. Reson. 187 (2007) 225.
4- Busico, V., Carbonniere, P., Cipullo, R., Pellecchia, R., Severn, J., Talarico, G., Macromol. Rapid Commun. 2007, 28, 1128.
5- Resconi, L., Cavallo, L., Fait, A., Piemontesi, F., Chem. Rev. 2000, 100, 1253.
6- Wang, W-J., Zhu, S., Macromolecules 33 (2000), 1157.
7- Cheng, H. N., Macromolecules 17 (1984), 1950.
8- Singh, G., Kothari, A., Gupta, V., Polymer Testing 28 5 (2009), 475.
9- Kakugo, M., Naito, Y., Mizunuma, K., Miyatake, T. Macromolecules 15 (1982) 1150.
10- Randall, J. Macromol. Sci., Rev. Macromol. Chem. Phys. 1989, C29, 201.
11- Resconi, L., Cavallo, L., Fait, A., Piemontesi, F., Chem. Rev. 2000, 100, 1253.

### Comonomer content poly(propylene-co-ethylene-co-butene)

Quantitative ¹³C{¹H} NMR spectra recorded in the molten-state using a Bruker Advance III 500 NMR spectrometer operating at 500.13 and 125.76 MHz for ¹H and ¹³C respectively. All spectra were recorded using a ¹³C optimised 7 mm magic-angle spinning (MAS) probe head at 180°C using nitrogen gas for all pneumatics. Approximately 200 mg of material was packed into a 7 mm outer diameter zirconia MAS rotor and spun at 4.5 kHz. This setup was chosen primarily for the high sensitivity needed for rapid identification and accurate quantification{1, 2, 6} Standard single-pulse excitation was employed utilising the NOE at short recycle delays{3, 1} and the RS-HEPT decoupling scheme{4, 5}. A total of 1024 (1k) transients were acquired per spectra.

Quantitative ¹³C{¹H} NMR spectra were processed, integrated and relevant quantitative properties determined from the integrals. All chemical shifts are internally referenced to the methyl isotactic pentad *(mmmm)* at 21.85 ppm.

Characteristic signals corresponding to regio defects were not observed {11}. The amount of propene was quantified based on the main Sαα methylene sites at 44.1 ppm: $Ptotal = {I}_{Sαα}$

Characteristic signals corresponding to the incorporation of 1-butene were observed and the comonomer content quantified in the following way. The amount isolated 1-butene incorporated in PPBPP sequences was quantified using the integral of the αB2 sites at 44.1 ppm accounting for the number of reporting sites per comonomer: $B = {I}_{αB 2} / 2$

The amount consecutively incorporated 1-butene in PPBBPP sequences was quantified using the integral of the ααB2 site at 40.5 ppm accounting for the number of reporting sites per comonomer: $BB = 2 * {I}_{ααB 2}$

The total 1-butene content was calculated based on the sum of isolated and consecutively incorporated 1-butene: $Btotal = B + BB$

The total mole fraction of 1-butene in the polymer was then calculated as: $fB = \left(Btotal/\left(Etotal+Ptotal+Btotal\right)\right.$

Characteristic signals corresponding to the incorporation of ethylene were observed and the comonomer content quantified in the following way. The amount isolated ethylene incorporated in PPEPP sequences was quantified using the integral of the Sαγ sites at 37.9 ppm accounting for the number of reporting sites per comonomer: $E = {I}_{Sαγ} / 2$

With no sites indicative of consecutive incorporation observed the total ethylene comonomer content was calculated solely on this quantity: $Etotal = E$

The total mole fraction of ethylene in the polymer was then calculated as: $fE = \left(Etotal/\left(Etotal+Ptotal+Btotal\right)\right.$

The mole percent comonomer incorporation was calculated from the mole fractions: $B \left[mol%\right] = 100 * fB$ $E \left[mol%\right] = 100 * fE$

The weight percent comonomer incorporation was calculated from the mole fractions: $B \left[wt%\right] = 100 * \left(fB*56.11\right) / \left(\left(fE*28.05\right)+\left(fB*56.11\right)+\left(\left(1-\left(fE+fB\right)\right)*42.08\right)\right)$ $E \left[wt%\right] = 100 * \left(fE*28.05\right) / \left(\left(fE*28.05\right)+\left(fB*56.11\right)+\left(\left(1-\left(fE+fB\right)\right)*42.08\right)\right)$

### Bibliographic references:

1- Klimke, K., Parkinson, M., Piel, C., Kaminsky, W., Spiess, H.W., Wilhelm, M., Macromol. Chem. Phys. 2006;207:382.
2- Parkinson, M., Klimke, K., Spiess, H.W., Wilhelm, M., Macromol. Chem. Phys. 2007;208:2128.
3- Pollard, M., Klimke, K., Graf, R., Spiess, H.W., Wilhelm, M., Sperber, O., Piel, C., Kaminsky, W., Macromolecules 2004;37:813.
4- Filip, X., Tripon, C., Filip, C., J. Mag. Resn. 2005, 176, 239.
5- Griffin, J.M., Tripon, C., Samoson, A., Filip, C., and Brown, S.P., Mag. Res. in Chem. 2007 45, S1, S198.
6- Castignolles, P., Graf, R., Parkinson, M., Wilhelm, M., Gaborieau, M., Polymer 50 (2009) 2373.
7- Busico, V., Cipullo, R., Prog. Polym. Sci. 26 (2001) 443.
8- Busico, V., Cipullo, R., Monaco, G., Vacatello, M., Segre, A.L., Macromoleucles 30 (1997) 6251.
9-Zhou, Z., Kuemmerle, R., Qiu, X., Redwine, D., Cong, R., Taha, A., Baugh, D. Winniford, B., J. Mag. Reson. 187 (2007) 225.
10- Busico, V., Carbonniere, P., Cipullo, R., Pellecchia, R., Severn, J., Talarico, G., Macromol. Rapid Commun. 2007, 28, 1128.
11- Resconi, L., Cavallo, L., Fait, A., Piemontesi, F., Chem. Rev. 2000, 100, 1253.

### Flexural Modulus

The flexural modulus was determined in 3-point-bending at 23 °C according to ISO 178 on 80x10x4 mm³ test bars injection moulded in line with EN ISO 1873-2.

### Notched impact strength (NIS):

The Charpy notched impact strength (NIS) was measured according to ISO 179 1eA at +23°C, using injection moulded bar test specimens of 80x10x4 mm³ prepared in accordance with EN ISO 1873-2.

### Haze

Haze is determined according to ASTM D1003-00 on 60x60x1 mm³ plaques injection moulded in line with EN ISO 1873-2 and indicated as Haze₁.

Or haze is determined according to ASTM D1003-00 on the blown films of 50 µm thickness and indicated as Haze_{(50µm)}.

### Optomechnical ability (OMA)

Optomechnical ability (OMA) is understood as the ratio of mechanical (especially impact and flexural modulus) behaviour, to optical performance, namely haze, wherein the mechanical properties are targeted to be as high as possible and the optical performance is desired to be as low as possible.

The optomechanical ability is determined according the formula given below FORMULA: $OMA = \frac{Flex Modulus \left[MPa\right] ∗ NIS \left[\frac{kJ}{{m}^{2}}\right]}{Haze \left(1mm\right) \left[%\right]}$ Unit: [(kJ*MPA)/ (m² * %)]

### Optomechnical ability II (OMA II)

Optomechnical ability (OMA II) is understood as the ratio of mechanical (especially dart-drop strength (DDI) and tensile (MD)) behaviour, to optical performance, namely haze, wherein the mechanical properties are targeted to be as high as possible and the optical performance in the sense of haze is desired to be as low as possible.

The optomechanical ability II (OMA II) is determined according the formula given below: $OMA II = \frac{Tensile Modulus \left(MD\right) \left[MPa\right] * DDI \left(g\right)}{Haze \left(50 μm\right) \left[%\right]}$ Unit: [MPa*g/%]

### Sealing initiation temperature (SIT); sealing end temperature (SET), sealing range:

The method determines the sealing temperature range (sealing range) of polypropylene films, in particular blown films or cast films according to ASTM F1921 - 12. Seal pressure, cool time and peel speed are modified as stated below.

The sealing temperature range is the temperature range, in which the films can be sealed according to conditions given below.

The lower limit (heat sealing initiation temperature (SIT)) is the sealing temperature at which a sealing strength of > 5 N is achieved. The upper limit (sealing end temperature (SET)) is reached, when the films stick to the sealing device.

The sealing range is determined on a J&B Universal Sealing Machine Type 3000 with a blown film of 50 µm thickness with the following further parameters:
Specimen width: 25.4 mm
Seal Pressure: 0.1 N/mm²
Seal Time: 0.1 sec
Cool time: 99 sec
Peel Speed: 10 mm/sec
Start temperature: 80°C
End temperature: 150°C
Increments: 10°C

Specimen is sealed A to A at each sealbar temperature and seal strength (force) is determined at each step.

The temperature is determined at which the seal strength reaches 5 N.

### Tensile Modulus

Tensile moduli in machine (MD) direction were determined acc. to ISO 527-3 on blown films with a thickness of 50 µm at a cross head speed of 100 mm/min.

### Dart drop strength (DDI)

Dart-drop is measured using ASTM D1709, method A (Alternative Testing Technique) from the film samples. A dart with a 38 mm diameter hemispherical head is dropped from a height of 0.66 m onto a film clamped over a hole. Successive sets of twenty specimens are tested. One weight is used for each set and the weight is increased (or decreased) from set to set by uniform increments. The weight resulting in failure of 50 % of the specimens is calculated and reported.

### Differential scanning calorimetry (DSC)

Differential scanning calorimetry (DSC) analysis, melting temperature (Tₘ) and melt enthalpy (Hₘ), crystallization temperature (T_{c}), and heat of crystallization (H_{c}, H_{CR}) are measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature (T_{c}) and heat of crystallization (H_{c}) are determined from the cooling step, while melting temperature (Tₘ) and melt enthalpy (Hm) are determined from the second heating step.

Throughout the patent the term Tc or (Tcr) is understood as Peak temperature of crystallization as determined by DSC at a cooling rate of 10 K/min.

### Examples:

### Component (A):

Propylene-ethylene-1-butene terpolymer for the Inventive Examples (IE) and the comparative example (CE) was made in a Borstar PP pilot plant in the slurry loop reactor only with an upstream prepolymerization step.

The gas phase reactor (GPR) was used as high pressure (HP) flash with pressure of 1700 kPa and bed level of 70 cm. 35 kg/h propylene flush was used to keep the direct feed line open between the loop and GPR.

The catalyst used was Avant ZN180M, provided by LyondelBasell. Cocatalyst was TEAL and the external donor was Donor D.

Table 1 shows the polymerization data for the propylene-ethylene-1-butene terpolymer.

**Table 1:**

| Prepolymerization | unit | IE1 | IE2 | IE3 | IE4 | CE1 | CE2 | CE3 |
|---|---|---|---|---|---|---|---|---|
| Temperature | [°C] | 20 | 20 | 20 | 20 | 20 | 20 | 20 |
| Pressure | [kPa] | 5500 | 5500 | 5500 | 5500 | 5500 | 5500 | 5500 |
| Catalyst feed | [g/h] | ? | ? | ? | ? | ? | ? | ? |
| Donor D feed | [g/t C₃] | 40 | 40 | 40 | 40 | 40 | 40 | 40 |
| TEAL feed | [g/t C₃] | 170 | 170 | 170 | 170 | 170 | 170 | 170 |
| Al/donor | [mol/mol] | 10 | 10 | 10 | 10 | 10 | 10 | 10 |
| Al/Ti | [mol/mol] | 150 | 150 | 150 | 150 | 150 | 150 | 150 |
| Residence time | [min] | 20 | 20 | 20 | 20 | 20 | 20 | 20 |

| Loop | | | | | | | | |
|---|---|---|---|---|---|---|---|---|
| Temperature | [°C] | 63 | 63 | 63 | 63 | 63 | 63 | 63 |
| Pressure | [kPa] | 5500 | 5500 | 5500 | 5500 | 5500 | 5500 | 5500 |
| Feed H2/C3 ratio | [mol/kmol] | 0.6 | 0.6 | 0.6 | 0.6 | 0.6 | 0.8 | 0.6 |
| Feed C2/C3 ratio | [mol/kmol] | 10.8 | 11.8 | 15.3 | 14.5 | 5.5 | 5.5 | 10.9 |
| Feed C4/C3 ratio | [mol/kmol] | 306 | 303 | 203 | 228.9 | 266 | 311 | 200.7 |
| Polymer residence time | [h] | 0.5 | 0.5 | 0.5 | 0.5 | 0.5 | 0.5 | 0.5 |

All products (IE1-IE4, CE1-CE3) were stabilized with 0.2 wt% of Irganox B225 (1:1-blend of Irganox 1010 (Pentaerythrityl-tetrakis(3-(3',5'-di-tert.butyl-4-hydroxytoluyl)-propionate and tris (2,4-di-t-butylphenyl) phosphate) phosphite) of BASF AG, Germany) and 0.1 wt% calcium stearate.

As CE4 RB307MO, a propylene-ethylene random copolymer having an ethylene content of 3.5 wt%, a melting point of 148°C and an MFR₂ of 1.5 g/10min commercially available from Borealis AG, was used.

**Table 2: Properties of polypropylene composition before nucleation**

| | | **IE1** | **IE2** | **IE3** | **IE4** | **CE1** | **CE2** | **CE3** | **CE4** |
|---|---|---|---|---|---|---|---|---|---|
| MFR₂ | [g/10min] | 2.2 | 2.2 | 1.5 | 1.7 | 1.6 | 2.8 | 2.5 | 1.5 |
| C2 | [wt%] | 1.13 | 1.14 | 1.40 | 1.40 | 0.50 | 0.50 | 0.96 | 4.5 |
| C4 | [wt%] | 6.0 | 7.0 | 6.8 | 7.1 | 5.2 | 6.8 | 4.6 | 0.0 |
| XCS | [wt%] | 10.7 | 11.6 | 9.1 | 10.8 | 6.0 | 6.8 | 7.9 | 8.5 |
| Tm₁ | [°C] | 135 | 134 | 136 | 134 | 142 | 141 | 140 | 148 |
| Tm₂ | [°C] | - | - | - | - | - | - | - | - |
| Flexural Modulus | MPa | 674 | 648 | 726 | 656 | 877 | 799 | 792 | 786 |
| NIS 23°C | [kJ/m²] | 10.1 | 9.6 | 8.6 | 9.4 | 5.0 | 4.8 | 5.1 | 6.2 |

To all polypropylene compositions 2000 ppm of the organophosphate type α-nucleating agent Adekastab NA-21 (a mixture of hydroxybis (2,4,8,10-tetra-tert. butyl-6-hydroxy-12H-dibenzo(d,g)(1.,3,2) dioxaphosphocin 6-oxidato) aluminium, CAS no. 151841-65-5 and Li-stearate, CAS no. 4485-12-5; commercially available from Adeka, France) were added - extruded on a ZSK 18 twin screw extruder with melt temperature of 220°C and throughput about 4 kg/h.

**Table 3: Properties of polypropylene composition after nucleation**

| | | **IE1** | **IE2** | **IE3** | **IE4** | **CE1** | **CE2** | **CE3** | **CE4** |
|---|---|---|---|---|---|---|---|---|---|
| MFR₂ | [g/10min] | 2.2 | 2.2 | 1.5 | 1.7 | 1.6 | 2.8 | 2.5 | 2.0 |
| Tm₁ | [°C] | 140 | 139 | 141 | 138 | 146 | 145 | 144 | 144 |
| Tm₂ | [°C] | 126 | 125 | 128 | 125 | 131 | 129 | 130 | 132 |
| Flexural Modulus | MPa | 768 | 734 | 800 | 731 | 1014 | 931 | 906 | 930 |
| NIS 23°C | [kJ/m²] | 13.8 | 17.0 | 10.8 | 18.2 | 6.6 | 7.6 | 7.1 | 17.9 |
| Haze, | [%] | 9.3 | 8.9 | 9.4 | 9.0 | 10.8 | 10.1 | 10.1 | 13.0 |
| OMA | [(kJ*MPA)/ (m² * %)] | 1139 | 1399 | 919 | 1474 | 624 | 698 | 632 | 1276 |

As can be easily seen, the inventive composition has a much better overall performance than the comparative examples.

CE1 to CE3, similar to the inventive Examples of WO 2009016022, show good optics, but worse impact strength, especially after nucleation and has a worse overall performance in view of OMA.

CE4 is a state of the art solution based on a low flow, high C2 content random copolymer nucleated with NA-21. This combination shows good impact strength but worse optics.

IE1 to IE 4 gives excellent stiffness/impact balance and good optics, i.e. low haze, at the same time.

The polymer compositions of IE2 and CE3 have been converted to blown films.

Blown films were made on a Collin blown film line.

This line has a screw diameter of 30 millimeters (mm), L/D of 30, a die diameter of 60 mm, a die gap of 1.5 mm and a duo-lip cooling ring. The film samples were produced at 190°C with an average thickness of 50 µm, with a 2.5 blow-up-ratio and an output rate of about 8 kilograms per hour (kg/h).

The films were furthermore steam sterilized.

Steam sterilization was performed in a Systec D series machine (Systec Inc., USA). The samples were heated up at a heating rate of 5°C/min starting from 23°C. After having been kept for 30 min at 121°C, they were removed immediately from the steam sterilizer and stored at room temperature until being processed further.

The properties of the films can be seen in Table 4.

**Table 4: properties of the blown films**

| Polymer composition | | CE3 | IE2 |
|---|---|---|---|
| SIT | °C | 121 | 115 |
| Tensile modulus/MD | MPa | 996 | 813 |
| DDI | 9 | 48 | 59 |
| Haze/b.s. | % | 8.5 | 8.8 |
| OMA II | MPa*g/% | 5274 | 5451 |
| Haze/a.s. | % | 7.8 | 9.3 |

| | | | |
|---|---|---|---|
| b.s. before sterilization a.s. after sterilization | | | |

## Claims

1. Polypropylene composition comprising
(A) at least 50.0 wt% of a propylene terpolymer comprising
(i) ethylene-derived comonomer units in an amount of from 1.0 to 3.0 wt% and
(ii) comonomer units derived from a C₄ to C₁₀ α-olefin in an amount of from 5.5 to 10.0 wt% whereby the MFR₂ (230°C, 2.16kg, ISO1133) of the propylene terpolymer is in a range of 0.5 to 15.0 g/10 min and
(B) 0.0001 to 1.0 wt% of an α-nucleating agent and
(C) optionally one or more further additives in a total amount of from 0.0 up to 5.0 wt%, based on the composition, selected from the group comprising slip agents, anti-block agents, UV stabilizers, antistatic agents, antioxidants,
wherein the polypropylene composition exhibits a double melting peak in differential scanning calorimetry, both peak temperatures being in the range of 120 to 155°C, and
wherein the α-nucleating agent is selected from phosphate-based α-nucleating agents and sorbitol-based α-nucleating agents.

2. Polypropylene composition according to claim 1, wherein the comonomer (ii) is selected from 1-butene, 1-hexene or 1-octene.

3. Polypropylene composition according to claim 2, wherein the comonomer (ii) is 1-butene.

4. Polypropylene composition according to any of the preceding claims 1 to 3, wherein the α-nucleating agent is selected from phosphorus based nucleating agents.

5. Polypropylene composition according to any of the preceding claims 1 to 4, wherein the polypropylene composition has Notched Impact Strength NIS determined according to ISO179/1eA at +23 °C of 8.0 to 30.0 kJ/m² and a haze according to ASTM D 1300-00 determined on 1 mm plaques below 10.0 %.

6. Polypropylene composition according to any of the preceding claims 1 to 5, wherein the polypropylene composition has a flexural Modulus according to ISO178 of at least 600 MPa.

7. Polypropylene composition according to any of the preceding claims 1 to 6, wherein the polypropylene composition has an optomechancial ability (OMA) of at least 700 or more, the optomechancial ability (OMA) being determined according to formula: $OMA = \frac{Flex Modulus \left[MPa\right] ∗ NIS ? \left[\frac{kJ}{{m}^{2}}\right]}{Haze \left(1mm\right) \left[%\right]}$

8. Process for the preparation of the polypropylene composition according to any of the preceding claims 1 to 7, the process comprising the steps of
(i) preparing the propylene terpolymer by polymerizing propylene, ethylene and a C₄ to C₁₀ α-olefin in the presence of a Ziegler-Natta catalyst,
(ii) mixing said propylene terpolymer (A) with an α-nucleating agent (B), optionally in the presence of one or more additives (C), to obtain a mixture of components (A), (B) and optional (C), and
(iii) extruding said mixture to obtain the polypropylene composition.

9. Use of a polypropylene composition according to any of the preceding claims 1 to 7 for the production of articles.

10. Use of a polypropylene composition according to any one of the preceding claims 1 to 7 for the production of sterilizable articles.

11. An article comprising the polypropylene composition according to any of the preceding claims 1 to 7.

12. An article according to claim 11, wherein the article is an unoriented film comprising more than 90% of the composition according to any one of the preceding claims 1 to 7, wherein the film is a cast film or a blown film.

13. An article according to claim 12, wherein the film is a blown film, said blown film having an optomechanical ability II (OMA II) determined on 50 µm blown film according the formula given below: $OMA II = \frac{Tensile Modulus \left(MD\right) \left[MPa\right] * DDI \left(g\right)}{Haze \left(50 μm\right) \left[%\right]}$ of at least 5300 [MPa*g/%],
wherein the Tensile modulus in machine (MD) direction was determined acc. to ISO 527-3 and Dart-drop (DDI) was measured using ASTM D1709, method A.

14. An article according to claim 11, wherein the article is a moulded article comprising the inventive polypropylene composition according to any of the preceding claims 1 to 7.

15. An article according to claim 14, wherein the article is a containers, comprising cups, buckets, beakers, trays or parts of such articles, comprising see-through-windows, lids, or articles being suitable for medical or diagnostic purposes, comprising as syringes, beakers, titre plates, pipettes.

## Patentansprüche

1. Eine Polypropylen-Zusammensetzung, umfassend
(A) mindestens 50,0 Gew.-% eines Propylen-Terpolymers, umfassend
(i) von Ethylen abgeleitete Comonomereinheiten in einer Menge von 1,0 bis 3,0 Gew.-% und
(ii) von einem C₄ bis C₁₀ α-Olefin abgeleitete Comonomereinheiten in einer Menge von 5,5 bis 10,0 Gew.-%
wobei der MFR₂ (230 °C, 2,16 kg, ISO 1133) des Propylen-Terpolymers im Bereich von 0,5 bis 15,0 g/10 min liegt und
(B) 0,0001 bis 1,0 Gew.-% eines α-Keimbildners und
(C) gegebenenfalls ein oder mehrere weitere Additive in einer Gesamtmenge von 0,0 bis 5,0 Gew.-%, bezogen auf die Zusammensetzung, ausgewählt aus der Gruppe bestehend aus Gleitmitteln, Antiblockmitteln, UV-Stabilisatoren, Antistatikmitteln und Antioxidantien,
wobei die Polypropylen-Zusammensetzung in der Differential-Scanning-Kalorimetrie einen doppelten Schmelzpeak aufweist, wobei beide Peak-Temperaturen im Bereich von 120 bis 155 °C liegen, und
wobei der α-Keimbildner aus α-Keimbildnern auf Phosphatbasis und α-Keimbildnern auf Sorbitolbasis ausgewählt ist.

2. Die Polypropylen-Zusammensetzung nach Anspruch 1, wobei das Comonomer (ii) aus 1-Buten, 1-Hexen oder 1-Octen ausgewählt ist.

3. Die Polypropylen-Zusammensetzung nach Anspruch 2, wobei das Comonomer (ii) 1-Buten ist.

4. Die Polypropylen-Zusammensetzung nach einem der vorstehenden Ansprüche 1 bis 3, wobei der α-Keimbildner aus Keimbildnern auf Phosphorbasis ausgewählt ist.

5. Die Polypropylen-Zusammensetzung nach einem der vorstehenden Ansprüche 1 bis 4, wobei die Polypropylen-Zusammensetzung eine gemäß ISO 179/1eA bei +23 °C bestimmte Kerbschlagzähigkeit (NIS) von 8,0 bis 30,0 kJ/m² und eine gemäß ASTM D 1300-00 an 1-mm-Platten bestimmte Trübung von unter 10,0 % aufweist.

6. Die Polypropylen-Zusammensetzung nach einem der vorstehenden Ansprüche 1 bis 5, wobei die Polypropylen-Zusammensetzung einen Biegemodul gemäß ISO 178 von mindestens 600 MPa aufweist.

7. Die Polypropylen-Zusammensetzung gemäß einem der vorstehenden Ansprüche 1 bis 6, wobei die Polypropylen-Zusammensetzung eine optomechanische Fähigkeit (OMA) von mindestens 700 aufweist, wobei die optomechanische Fähigkeit (OMA) gemäß der folgenden Formel bestimmt wird: $OMA = \frac{Flex Modulus \left[MPa\right] ∗ NIS ? \left[\frac{kJ}{{m}^{2}}\right]}{Haze \left(1mm\right) \left[%\right]}$

8. Ein Verfahren zur Herstellung der Polypropylen-Zusammensetzung nach einem der vorstehenden Ansprüche 1 bis 7, wobei das Verfahren die folgenden Schritte umfasst:
(i) Herstellen des Propylen-Terpolymers durch Polymerisation von Propylen, Ethylen und einem C₄ bis C₁₀ α-Olefin in Gegenwart eines Ziegler-Natta-Katalysators,
(ii) Mischen des Propylen-Terpolymers (A) mit einem α-Keimbildner (B), gegebenenfalls in Gegenwart eines oder mehrerer Additive (C), um eine Mischung aus den Komponenten (A), (B) und gegebenenfalls (C) zu erhalten, und
(iii) Extrudieren der Mischung, um die Polypropylen-Zusammensetzung zu erhalten.

9. Verwendung einer Polypropylen-Zusammensetzung gemäß einem der vorstehenden Ansprüche 1 bis 7 zur Herstellung von Gegenständen.

10. Verwendung einer Polypropylen-Zusammensetzung gemäß einem der vorstehenden Ansprüche 1 bis 7 zur Herstellung sterilisierbarer Gegenstände.

11. Ein Gegenstand, der die Polypropylen-Zusammensetzung gemäß einem der vorstehenden Ansprüche 1 bis 7 umfasst.

12. Der Gegenstand gemäß Anspruch 11, wobei der Gegenstand eine nicht orientierte Folie ist, die mehr als 90 % der Zusammensetzung gemäß einem der vorstehenden Ansprüche 1 bis 7 umfasst, wobei die Folie eine Gießfolie oder eine Blasfolie ist.

13. Der Gegenstand gemäß Anspruch 12, wobei die Folie eine Blasfolie ist, wobei die Blasfolie eine optomechanische Eigenschaft II (OMA II) aufweist, die an einer 50 µm dicken Blasfolie gemäß der nachstehend angegebenen Formel bestimmt wurde: $OMA II = \frac{Tensile Modulus \left(MD\right) \left[MPa\right] * DDI \left(g\right)}{Haze \left(50 μm\right) \left[%\right]}$ von mindestens 5300 [MPa*g/%],
wobei der Zugmodul (tensile modulus) in Maschinenrichtung (MD) gemäß ISO 527-3 bestimmt und der Dart-Drop (DDI) unter Verwendung von ASTM D1709, Methode A, gemessen wurde.

14. Der Gegenstand nach Anspruch 11, wobei es sich bei dem Gegenstand um einen Formkörper handelt, der die erfindungsgemäße Polypropylen-Zusammensetzung gemäß einem der vorstehenden Ansprüche 1 bis 7 umfasst.

15. Der Gegenstand nach Anspruch 14, wobei der Gegenstand ein Behälter ist, der Becher, Eimer, Messbecher, Schalen oder Teile solcher Gegenstände umfasst, die Sichtfenster oder Deckel aufweisen, oder Gegenstände, die für medizinische oder diagnostische Zwecke geeignet sind, wie beispielsweise Spritzen, Messbecher, Titerplatten und Pipetten.

## Revendications

1. Composition de polypropylène comprenant
(A) au moins 50,0 % en poids d'un terpolymère de propylène comprenant
(i) des motifs comonomères dérivés de l'éthylène en une quantité de 1,0 à 3,0 % en poids et
(ii) des motifs comonomères dérivés d'une α-oléfine en C₄ à C₁₀ en une quantité de 5,5 à 10,0 % en poids
dans laquelle le MFR₂ (230 °C, 2,16 kg, ISO1133) du terpolymère de propylène est dans une plage de 0,5 à 15,0 g/10 min et
(B) 0,0001 à 1,0 % en poids d'un agent d'α-nucléation et
(C) optionnellement un ou plusieurs autres additifs en une quantité totale de 0,0 à 5,0 % en poids, sur la base de la composition, sélectionnés dans le groupe comprenant les agents glissants, les agents anti-blocage, les stabilisants UV, les agents antistatiques, les antioxydants,
dans laquelle la composition de polypropylène présente un double pic de fusion en calorimétrie différentielle à balayage, les températures des deux pics étant dans la plage de 120 à 155 °C, et
dans laquelle l'agent d'α-nucléation est sélectionné parmi les agents d'α-nucléation à base de phosphate et les agents d'α-nucléation à base de sorbitol.

2. Composition de polypropylène selon la revendication 1, dans laquelle le comonomère (ii) est sélectionné parmi le 1-butène, le 1-hexène ou le 1-octène.

3. Composition de polypropylène selon la revendication 2, dans laquelle le comonomère (ii) est le 1-butène.

4. Composition de polypropylène selon l'une quelconque des revendications 1 à 3 précédentes, dans laquelle l'agent d'α-nucléation est sélectionné parmi les agents de nucléation à base de phosphore.

5. Composition de polypropylène selon l'une quelconque des revendications 1 à 4 précédentes, dans laquelle la composition de polypropylène présente une résistance au choc sur éprouvette entaillée NIS, déterminée selon la norme ISO179/1eA à +23 °C, de 8,0 à 30,0 kJ/m², et un trouble, déterminé sur des plaques de 1 mm selon la norme ASTM D 1300-00, inférieur à 10,0 %.

6. Composition de polypropylène selon l'une quelconque des revendications 1 à 5 précédentes, dans laquelle la composition de polypropylène présente un module de flexion selon la norme ISO178 d'au moins 600 MPa.

7. Composition de polypropylène selon l'une quelconque des revendications 1 à 6 précédentes, dans laquelle la composition de polypropylène présente une capacité optomécanique (OMA) d'au moins 700 ou plus, la capacité optomécanique (OMA) étant déterminée selon la formule : $OMA = \frac{Module de flexion \left[MPa\right] ∗ NIS ? \left[\frac{kJ}{{m}^{2}}\right]}{Trouble \left(1mm\right) \left[%\right]}$

8. Procédé de préparation de la composition de polypropylène selon l'une des revendications 1 à 7 précédentes, le procédé comprenant les étapes suivantes :
(i) la préparation du terpolymère de propylène par la polymérisation de propylène, d'éthylène et d'une α-oléfine en C₄ à C₁₀ en présence d'un catalyseur de Ziegler-Natta,
(ii) le mélange dudit terpolymère de propylène (A) avec un agent d'α-nucléation (B), optionnellement en présence d'un ou plusieurs additifs (C), pour obtenir un mélange de composants (A), (B) et optionnel (C), et
(iii) l'extrusion dudit mélange pour obtenir la composition de polypropylène.

9. Utilisation d'une composition de polypropylène selon l'une quelconque des revendications 1 à 7 précédentes pour la production d'articles.

10. Utilisation d'une composition de polypropylène selon l'une quelconque des revendications 1 à 7 précédentes pour la production d'articles stérilisables.

11. Article comprenant la composition de polypropylène selon l'une quelconque des revendications 1 à 7 précédentes.

12. Article selon la revendication 11, dans lequel l'article est un film non orienté comprenant plus de 90 % de la composition selon l'une quelconque des revendications 1 à 7 précédentes, dans lequel le film est un film coulé ou un film soufflé.

13. Article selon la revendication 12, dans lequel le film est un film soufflé, ledit film soufflé présentant une capacité optomécanique II (OMA II) déterminée sur un film soufflé de 50 µm selon la formule donnée ci-dessous : $OMA II = \frac{Module de traction \left(MD\right) \left[MPa\right] * DDI \left(g\right)}{Trouble \left(50 μm\right) \left[%\right]}$ d'au moins 5300 [MPa*g/%],
dans lequel le module de traction dans le sens machine (MD) a été déterminé selon la norme ISO 527-3 et le choc à la torpille (DDI) a été mesuré selon la norme ASTM D1709, méthode A.

14. Article selon la revendication 11, dans lequel l'article est un article moulé comprenant la composition de polypropylène de l'invention selon l'une quelconque des revendications 1 à 7 précédentes.

15. Article selon la revendication 14, dans lequel l'article est un récipient, comprenant des gobelets, des seaux, des béchers, des plateaux ou des parties de tels articles, comprenant des fenêtres transparentes, des couvercles, ou des articles appropriés pour des applications médicales ou diagnostiques, comprenant des seringues, des béchers, des plaques de titrage, des pipettes.
